# EUROPÄISCHE PATENTSCHRIFT

(11) **EP 1 259 932 B1**
(45) Veröffentlichungstag und Bekanntmachung des Hinweises auf die Patenterteilung: **19.05.2004**
(21) Anmeldenummer: 01925298.0
(22) Anmeldetag: 23.02.2001
(51) Int. Cl.: G06K 9/03, B07C 3/20, G06F 17/60

(54) **VERFAHREN UND VORRICHTUNG ZUM LESEN DER ADRESSEN VON SENDUNGEN**
METHOD AND DEVICE FOR READING THE ADDRESSES OF MAILED ITEMS
PROCEDE ET DISPOSITIF POUR LIRE LES ADRESSES D'ENVOIS POSTAUX

(30) Priorität: 02.03.2000 DE 10010241
(43) Veröffentlichungstag der Anmeldung: 27.11.2002
(73) Patentinhaber: Siemens Aktiengesellschaft, 80333 München (DE)
(72) Erfinder: GRUNDMANN, Hans-Jörg, 78333 Stockach (DE); ROSENBAUM, Walter, F-75116 Paris (FR)
(86) Internationale Anmeldenummer: PCT/DE2001/000713
(87) Internationale Veröffentlichungsnummer: WO 2001/065472

(56) Entgegenhaltungen:
- EP-A- 0 740 450
- US-A- 4 632 252
- US-A- 5 206 903

## Beschreibung

Die vorliegende Erfindung betrifft Verfahren zum Lesen der Adressen von Sendungen gemäß dem Oberbegriff der Ansprüche 1 und 2 sowie Vorrichtungen zum Durchführen der Verfahren gemäß den Oberbegriffen der Ansprüche 9 und 10.

Systeme zum automatischen Lesen von Adressen (OCR) sind auf dem Gebiet der Briefbearbeitung wohlbekannt und z.B. in der DE 195 31 392 C1 beschrieben. Mit modernen OCR-Briefsortieranlagen sind Bearbeitungsraten von 10 Briefen pro Sekunde, d.h. 36.000 Briefen pro Stunde und mehr erreichbar. Die Erkennungszuverlässigkeit variiert jedoch stark mit der Schriftart und Gesamtqualität der auf die Oberfläche der Briefe aufgebrachten Adreßinformation. Im Falle einer erfolgreichen Erkennung kann der betreffende Brief mit einem maschinenlesbaren Barcode versehen werden. Dieser Barcode erlaubt eine weitere mechanische Bearbeitung bis zu einer beliebigen gewünschten Sortierordnung. Insbesondere ermöglicht die Verwendung von Barcodes eine Sortierung der Briefe bis zur Sortierebene des Postgangs, bei der Briefe entsprechend der Reihenfolge ihrer Verteilung durch den Zusteller sortiert werden.

Da die Erkennungsraten der automatischen Lesesysteme sehr variieren, ist es notwendig, diese durch Videokodiereinrichtungen zu unterstützen. Hierbei werden die Videobilder der von dem OCR-Prozessor zurückgewiesenen Sendungen von Videokodierkräften an entsprechenden Videokodierplätzen manuell kodiert. Dabei werden die eingegebenen Adressen mittels eines Verzeichnisses in einen Sortierkode umgewandelt.

In Online-Videokodiersystemen (OVS) wird das Videobild dem Operator gezeigt, während die physikalische Sendung in Verzögerungsstrecken gehalten wird. In diesen Verzögerungsstrecken wird normalerweise die Sendung in Bewegung gehalten für eine Zeitdauer, die ausreicht, damit der Operator die notwendige Sortierinformation für das betreffende Bild eingibt. Die üblichen Verzögerungsstrecken erlauben eine Verzögerung zwischen 10 und 30 Sekunden. Je länger die Verzögerungsstrecke, desto größer sind die Kosten sowie die Erfordernisse für Wartung und die physische Größe der Anlage.

Das Hauptproblem bei der Verwendung von OVS ist, daß die zur Verfügung stehende Zeit lediglich ausreicht für eine sorgfältige Eingabe der Postleitzahl (ZIP) oder des Postcodes (PC), es sei denn, daß unpraktikabel lange Verzögerungsstrecken verwendet werden.

Daher wurden spezielle Kodierverfahren entwickelt, um die notwendige Online-Verzögerungszeit möglichst gering zu halten.

Um die Kodierproduktivität zu erhöhen und/oder die Angabe von sämtlichen Adreßelementen, d.h. ZIP/PC, Straße/Postfach, Adressat/Postfach, Adressat/Firma, zu ermöglichen, sind folgende wesentliche Methoden bekannt:

### Vorschau-Kodierung

Bei der Vorschau-Kodierung erfolgt eine simultane Darstellung der Bilder von zwei Sendungen; eines über dem anderen. Hierbei ist das niedrigere Bild das aktive, d.h. dessen Daten kodiert werden. Nach einem geeigneten Training ist es Operatoren möglich, die Information auf dem unteren Bild zu kodieren, während sie bereits die Adreßinformation vom oberen Bild aufnehmen. Das obere Bild wird anschließend aktiv und der Prozeß wird fortgesetzt. Mit der Vorschau-Kodierung ist es möglich, durch eine vollständige Überlappung der kognitiven und motorischen Funktionen beim Kodieren aufeinanderfolgender Abbilder die Operator-Produktivität zu verdoppeln.

### Extraktionskodierung

Da bei dem praktisch erreichbaren Online-Verzögerungs-Zeiten lediglich die ZIP/PC Adreßelemente verläßlich vom Operator eingegeben werden können, werden beim Extraktionskodieren bestimmte Schlüsselbestandteile der sich auf die Straße beziehenden Adreßbestandteils eingegeben. Üblicherweise basiert die Extraktionskodierung auf speziell entwickelten Regeln, bei denen ein Code fester Länge, als Zugangsschlüssel zu einem Adreßverzeichnis verwendet wird. Zum Beispiel verwendet die Royal Mail eine Extraktionsformel, die auf den ersten drei und den letzten zwei Buchstaben basiert. Dabei müssen Sonderregeln vom Operator auswendig gelernt werden, um überflüssige Adreßinformationen zu vermeiden und bestimmte unterscheidende Merkmale wie z.B. Richtungen zu berücksichtigen, z.B. Ost, West oder Kategorien z.B. Street, Lane, Road.

Extraktionskodierung besitzt trotz ihrer gewissen Effektivität einige größere Nachteile; insbesondere komplexe Extraktionsregeln, die häufig die Berücksichtigung des Endes eines Straßennamens erfordern, während diese Bestandteile üblicherweise am unklarsten geschrieben sind. Außerdem findet man eine signifikant hohe Rate von nicht eindeutigen Extraktionen, bei denen mehrere Einträge in einem Verzeichnis dem Extraktionscode entsprechen, so daß keine eindeutige Sortierentscheidung getroffen werden kann. Desweiteren ist zu berücksichtigen, daß die Eingabeproduktivität der Operatoren vermindert wird, sobald vom Operator Entscheidungen getroffen werden müssen, statt einer einfachen repetitiven Tastatureingabe.

### Offline Kodierung

Da bei keiner der oben erwähnten Kodierungstechniken eine ausreichend hohe Produktivität bei reiner Online-Kodierung erreicht wird, werden auch offline Kodiersysteme eingesetzt, wie in der US PS 49 92 649 beschrieben. Bei diesem System werden Sendungen mit nicht erkannten Adressen mit einer zusätzlichen Information, einer tracking identification (TID) versehen. Die nicht erkannten Sendungen werden extern gespeichert, während die Bilder dieser Sendungen Operatoren zum Kodieren präsentiert werden, wobei keine zeitlichen Einschränkungen vorliegen. Anschließend werden die Sendungen TID-Lesegeräten vorgeführt. Die TID wird mit der eingegebenen Adreßinformation verknüpft. Darauf basierend kann auch eine übliche Barcode-Sortierinformation auf die Sendung aufgebracht werden, so daß die betreffende Sendung wie üblicherweise OCR-gelesene Sendungen bearbeitet werden können. Obwohl das offline-Video-Kodierverfahren eine effektive Methode zur Kodierung sämtlicher Adreßbestandteile darstellt, werden zusätzlich Kapazitäten für die Weiterverarbeitung mit nichtgelesenen Adressen versehenen Sendungen und eine entsprechend komplexe Logistik verlangt.

Bekannt wurde in der US 4 632 252 auch ein Sortiersystem mit mehreren Sortierern, bestehend aus der Sortiersektion, Bildaufnahme und OCR-Einheit, und mehreren Kodierplätzen. Die in den OCR-Einheiten zurückgewiesenen Daten werden über eine Verteileinheit den Videokodierplätzen zugewiesen. Die mittels Videokodierung korrigierten Daten werden dann über die Verteileinheit an die Sortierer, von denen die zurückgewiesenen Daten stammen, zurückgesandt.

Unter Einbeziehung der Häufigkeit der zurückgewiesenen Daten in jedem Sortierer und der Leistungsmerkmale der Videokodierplätze erfolgt die Auswahl der Videokodierplätze so, daß der Durchsatz möglichst hoch ist und die Kodierplätze möglichst hoch und gleichmäßig ausgenutzt sind. Durch diese Anordnung, bei der die einzelnen Sortierer und die Videokodierplätze nicht starr miteinander gekoppelt sind, ist es auch möglich, Zurückweisungsspitzen bei einem bestimmten Sortierer abzufangen.

Der in den Ansprüchen 1, 2, 9 und 10 angegebenen Erfindung liegt die Aufgabe zugrunde, in einem Adreßlesesystem mit mindestens einer OCR-Einheit und mehreren Videokodierplätzen die Effektivität bei der Videokodierung weiter zu erhöhen, so daß die Anzahl der in einer bestimmten Zeitspanne kodierten Sendungen pro Videokodierkraft gesteigert wird.

Diese Aufgabe wird verfahrensgemäß durch die in den kennzeichnenden Teilen der Ansprüche 1 und 2 und vorrichtungsgemäß durch die in den kennzeichnenden Teilen der Ansprüche 9 und 10 angegebenen Verfahrensschritte und Merkmale gelöst.

Die Erfindung beruht auf dem Gedanken, die individuellen Kenntnisse und Fertigkeiten der Videokodierkräfte für bestimmte regionale Teilbereiche zu nutzen und ihnen möglichst nur Abbilder von beim OCR-Prozeß zurückgewiesenen Sendungen aus den Teilbereichen zuzuweisen, bei denen sie möglichst hohe Kodierleistungen aufweisen. Damit wird erreicht, daß sie sehr effektiv arbeiten und daß ihre Fertigkeiten in diesen Teilbereichen gezielt verbessert werden, da aufgrund der hohen Zuweisungsrate für diese Bereiche ein schneller Erfahrungszuwachs bei hoher Aktualität zu verzeichnen ist. Um dies auszuführen, werden die Abbilder der zurückgewiesenen Sendungen nach regionalen Teilgebieten der Empfängeradressen sortiert und für die einzelnen Teilbereiche die Videokodierkräfte nach Prioritäten gewichtet, wobei sich die Prioritäten nach den Kodierleistungen richten. Der Videokodierauftrag wird dann immer der freien Videokodierkraft zugewiesen, die die höchste Priorität besitzt. Da jede Videokodierkraft ihre persönliche Kennung am jeweiligen Videokodierplatz eingibt, ist es somit auch klar, an welchen Videokodierplatz der jeweilige Kodierauftrag zu verteilen ist. In äquivalenter Weise können natürlich für jede Videokodierkraft die zu bearbeitenden Teilbereiche nach Prioritäten gewichtet werden und die Zuweisung der Videokodieraufträge erfolgt dann ebenfalls so, daß jede freie Videokodierkraft den Videokodierauftrag erhält, bei welcher der entsprechende Teilbereich die höchste Priorität aufweist.

Vorteilhafte Ausgestaltungen der Erfindung sind in den Unteransprüchen dargestellt.

So ist es vorteilhaft, den Umfang der Kenntnisse und Fertigkeiten der Videokodierkräfte und damit die Prioritätseinstufung in den regionalen Teilbereichen anhand statistisch aufbereiteter Kodierleistungen zu ermitteln.

Vorteilhaft ist es auch, die an den Videokodierplätzen zu kodierenden Abbilder nach den regionalen Teilbereichen sortiert zu speichern, bevor sie an die Videokodierplätze verteilt werden.

In einer weiteren vorteilhaften Ausgestaltung werden die bei der Videokodierung erhaltenen Informationen über erkannte Adreßteile zusammen mit dem zugehörigen Abbild der Sendung für den Fall, daß die Videokodierung in festgelegter Zeit nicht erfolgreich war, erneut der OCR-Einheit zu einer zweiten automatischen Auswertung zugeführt. Mit diesen zusätzlichen Informationen steigt die Wahrscheinlichkeit des erfolgreichen Lesens erheblich.

Sollte dieser zweite automatische Lesevorgang wieder nicht erfolgreich sein, so kann das Abbild mit den Teilergebnissen des zweiten automatischen Lesevorgangs nochmals an dem gleichen Videokodierplatz kodiert werden.

Vorteilhaft ist es, den ersten Videokodiervorgang mit einer Extraktionskodierung und den zweiten Videokodiervorgang mit einer Selektion aus einer Anzahl von alternativen Auswertungsergebnissen durchzuführen.

Im folgenden wird die Erfindung anhand von Zeichnungen beispielhaft dargestellt. Im einzelnen zeigen:
- FIG 1: eine schematische Darstellung einer Vorrichtung zur Ausführung des Verfahrens
- FIG 2: eine Übersicht über den Verfahrensablauf

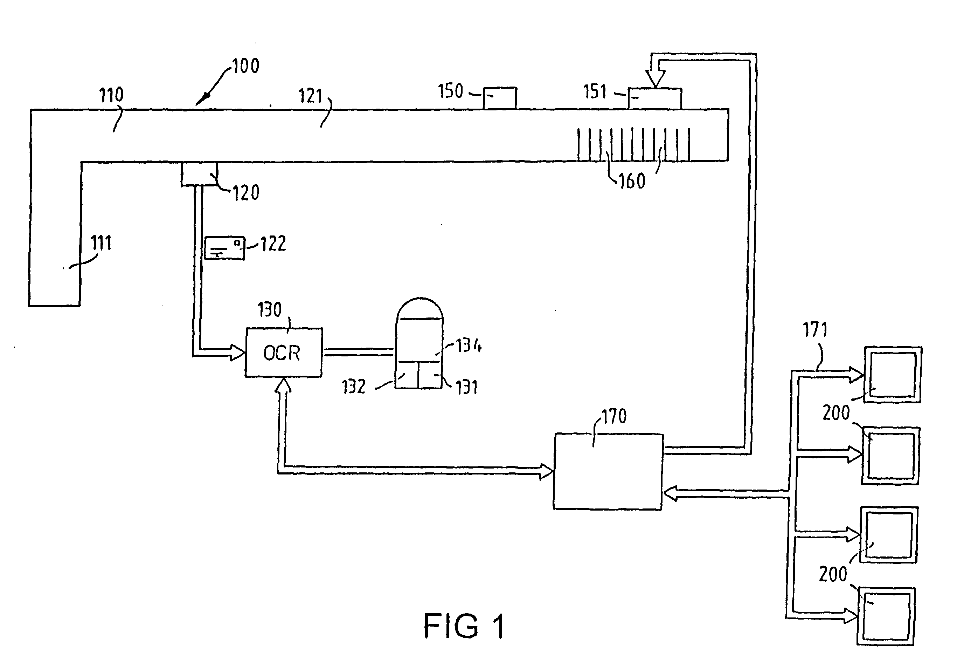

FIG 1 zeigt eine schematische Darstellung einer Briefverteilanlage, mit der das erfindungsgemäße Verfahren ausgeführt werden kann. Ein OCR-Briefsortierer 100 besteht aus einer Zuführeinrichtung 110, die sukzessive Sendungen aus einem Magazin 111 abzieht und mit ca. 10 Sendungen pro Sekunde zu einem hochauflösenden Videoscanner 120 transportiert. Anschließend werden die Sendungen in einer Verzögerungsstrecke 121 transportiert. Die Sendungen weisen üblicherweise auf ihrer Oberfläche Adreßinformationen auf. Im OCR-Prozessor 130 erfolgt eine Auswertung der Adreßinformationen der Abbilder der Sendungen, die vom Videoscanner 120 gewonnen wurden. Im Fall einer vollständigen Auswertung wird ein Barcodedrucker 150 angesteuert und die Sendung wird mit einem entsprechenden Barcode für die anschließende Sortierung in Sortierfächer 160 versehen. Der OCR-Prozessor 130 besteht aus einem oder mehreren Microprozessoren 131 mit assoziiertem Speicher 132, um Abbilder der Sendungen zu speichern. Weiterhin beinhaltet der OCR-Prozessor 130 ein Adreßverzeichnis 134 mit ZIP-Codes, Städtenamen und Straßennamen und evtl. weiterer adreßbezogener Information. Bei der Auswertung der Adreßinformation aufweisenden Abbilder erfolgt eine merkmalsgesteuerte Reduktion der aus dem Adreßverzeichnis gewonnenen Eintragung, so daß eine Art Teilwörterbuch erzeugt wird. In einzelnen Eintragungen werden dabei Glaubwürdigkeiten zugeordnet, so daß bei der Auswertung eine Anzahl von Daten von richtig erkannten Adressen erzeugt werden. Die Vorrichtung enthält weiterhin eine Auftragsverteileinrichtung 170 sowie eine Anzahl Videokodierplätze 200, die mit der Auftragsverteileinrichtung 170 direkt oder durch ein lokales Netzwerk (LAN) 171 verbunden sind. Falls die OCR-Auswertung eines Abbildes nicht, d.h. vollständig erfolgreich war, wird dieses Bild vom OCR-Prozessor 130 zur Auftragsverteileinrichtung 170 transferiert, die einerseits den TID Barcodedrucker 151 steuert und andererseits das entsprechende Bild zu einem der Videokodierplätze 200 sendet. Der TID Barcodeprinter 151 bringt auf die entsprechende Sendung einen Identifikationscode TID auf, der es zu einem späteren Zeitpunkt ermöglicht, die ausgewertete Adreßinformation mit der physikalischen Sendung zu knüpfen. Die Auswertung der Abbilder erfolgt in diesem Fall offline, obwohl grundsätzlich bei einer genügend langen Verzögerungszeit auch eine online-Auswertung durch Videokodierung möglich ist. Im letzteren Fall kann der TID auch zu einem späteren Zeitpunkt, d.h. wenn die Videokodierung innerhalb einer bestimmten vorgegebenen Zeit nicht zu einer vollständigen Auswertung geführt hat, auf die Sendungen aufgebracht werden.

In diesem Beispiel ist die Auftragsverteileinrichtung nur mit einem OCR-Briefsortierer 100 mit OCR-Prozessor 130 verbunden. Selbstverständlich ist die Kopplung auch mit mehreren OCR-Briefsortierern möglich.

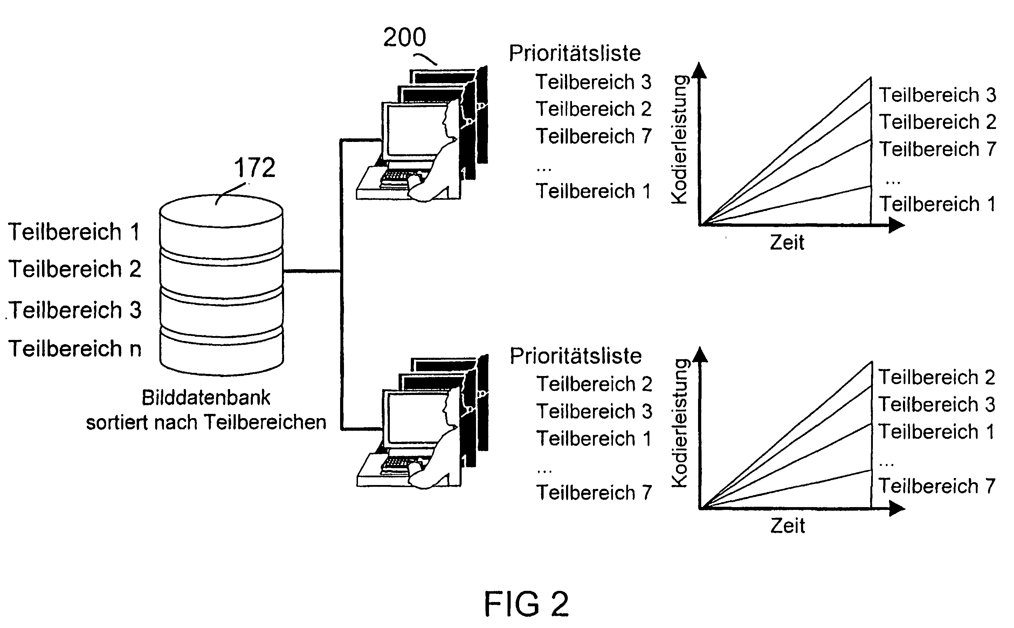

Nach dem in FIG 2 dargestellten Ablauf werden bei nicht erfolgreicher OCR-Auswertung der Sendungen eines festgelegten Bereiches die entsprechenden Abbilder der Sendungsoberflächen in einer Datenbasis, sortiert nach Teilbereichen, gespeichert. Dies erfolgt hier innerhalb der Auftragsverteileinrichtung 170. Das sortierte Zwischenspeichern ist notwendig, da nicht immer sichergestellt werden kann, daß bei Bedarf online entsprechende Videokodierplätze frei sind. Die Teilbereiche werden den Videokodierkräften an den Videokodierplätzen nach Prioritäten zugeordnet, die sich jeweils nach Kenntnissen und Fertigkeiten der Videokodierkraft richten (z.B. aufgrund bisheriger Wohnsitze usw.). Je höher die Kenntnisse und Fertigkeiten für die jeweiligen Teilbereiche sind, eine desto höhere Priorität haben sie für diese Videokodierkraft. Teilbereiche mit entsprechend geringeren Kenntnissen und Fertigkeiten weisen eine entsprechend geringere Priorität auf.

Die in einer Datenbank 172 der Auftragsverteileinrichtung gespeicherten und nach Teilbereichen sortierten Abbilder der vom OCR-Prozessor 130 zurückgewiesenen Sendungen werden also entsprechend der Prioritäten auf die Videokodierplätze 200 verteilt.

In dem Beispiel sind die Abbilder auf n Teilbereiche unterteilt. Von diesen n Teilbereichen werden entsprechend der FIG 2 7 Teilbereiche von zwei Videokodierkräften bearbeitet. Die den oberen Videokodierplatz 200 benutzende Videokodierkraft, die ihre persönliche Kennung an die Auftragsverteileinrichtung 170 gemeldet hat und somit für diesen Videokodierplatz 200 identifiziert ist, hat aufgrund ihrer Fähigkeiten und Kenntnisse und damit ihrer Kodierleistung in den verschiedenen Teilbereichen, die in dem Diagramm dargestellt ist, folgende Prioritätenzuordnung:

**Tabelle 1**

| Priorität | Teilbereich Nr. |
|---|---|
| 1 | 3 |
| 2 | 2 |
| 3 | 7 |
| . | . |
| . | . |
| . | . |
| 7 | 1 |

Die Videokodierkraft am unteren Videokodierplatz hat folgende Prioritätenzuordnung:

**Tabelle 2**

| Priorität | Teilbereich Nr. |
|---|---|
| 1 | 2 |
| 2 | 3 |
| 3 | 1 |
| . | . |
| . | . |
| . | . |
| 7 | 7 |

Ist also ein Abbild aus dem Teilbereich 3 zu kodieren und beide Videokodierplätze sind frei, so wird es an den oberen verteilt, da für die Videokodierkraft dort dieser Teilbereich die höchste Priorität besitzt. Muß ein Abbild aus dem Teilbereich 2 kodiert werden und beide Videokodierplätze 200 sind frei, so erhält entsprechend der untere Videokodierplatz 200 diese Sendung, da bei der Videokodierkraft an diesem Platz der Teilbereich 2 die höchste Priorität hat. Wäre der untere Videokodierplatz gerade belegt durch Abarbeitung eines Auftrages, so würde dieser Auftrag zum oberen Videokodierplatz 200 geleitet werden, da der Teilbereich dort die zweite Priorität besitzt usw. Ist nicht genügend Zurückweisungsvolumen vorhanden, so daß Sendungen aus Teilbereichen mit den höchsten Prioritäten für die Videokodierkräfte nicht vorhanden sind, so erhalten die Videokodierkräfte Abbilder von Sendungen aus Teilbereichen mit einer geringeren Priorität. Die Aufteilung der Teilbereiche auf die Videokodierkräfte kann dabei je nach den konkreten Bedingungen gewählt werden, z.B. alle Teilbereiche auf alle Videokodierkräfte oder Gruppen von Teilbereichen auf Gruppen von Videokodierkräften.

Durch dieses Verfahren wird eine möglichst effektive Kodierarbeit der Videokodierkräfte ermöglicht.

Zur zusätzlichen Effektivierung des Adreßleseprozesses ist die Auftragsverteileinrichtung 170 zusätzlich derart ausgebildet, daß von der Videokodierung, vorzugsweise als Extraktionskodierung, nicht vollständig ausgewertete Adreßinformationen unter Verwendung der Ergebnisse der Videokodierung im OCR-Prozessor 130 einer weiteren automatischen Adreßauswertung zugeführt werden.

Anschließend erfolgt eine Entscheidung, ob nunmehr eine vollständige Auswertung des betreffenden Bildes stattgefunden hat. Im positiven Fall wird die entsprechende Information zum weiteren Sortieren der Sendung verwendet. Ist die Entscheidung negativ erfolgt eine weitere Videokodierung unter Verwendung der Ergebnisse der weiteren automatischen Auswertung. Vorzugsweise werden dabei der Videokodierkraft eine Anzahl von Alternativen zur Selektion vorgeführt, aus denen eine Selektion vorzunehmen ist.

Vorzugsweise werden die beiden letzten Schritte, nämlich die weitere automatische Auswertung sowie die weitere Videokodierung nicht mehr online sondern offline erfolgen, weil die zur Verfügung stehende Verzögerungszeit zu gering ist für eine online-Ausführung.

Die zusätzliche Information aus der Videokodierung erhöht bei der zweiten automatischen Auswertung die Wahrscheinlichkeit einer vollständigen Auswertung bei der weiteren automatischen Auswertung.

Bei der zweiten Videokodierung derjenigen Abbilder, für die bei den vorhergehenden Phasen keine vollständige Auswertung möglich war, werden Abbilder der nicht ausgewerteten Adressen der Videokodierkraft präsentiert, zusammen mit den Ergebnissen der vorhergehenden Videokodierung und der automatischen Auswertung der zweiten Phase. Vorzugsweise hat die Videokodierkraft hierbei lediglich eine Selektion aus vorgegebenen Alternativen vorzunehmen.

## Patentansprüche

1. Verfahren zum Lesen der Adressen von Sendungen, bei dem die Abbilder der die Adressen aufweisenden Sendungsoberflächen aufgenommen, gespeichert und mindestens einer OCR-Einheit zum Erkennen der Adressen und Generieren entsprechender Adreßkodes zugeführt werden und bei dem im Falle nicht eindeutiger Leseergebnisse durch die OCR-Einheit/en die betreffenden Abbilder an mehreren Videokodierplätzen videokodiert werden, wobei die Verteilung der entsprechenden Videokodieraufträge an die Videokodierplätze in einer Auftragsverteileinrichtung erfolgt, **dadurch gekennzeichnet, daß** jede Videokodierkraft an ihrem Videokodierplatz eine persönliche Kennung eingibt, die an die Auftragsverteileinrichtung gemeldet wird, daß die zu kodierenden Abbilder der Sendungen in mehrere regionale Teilbereiche für die Empfängeradressen aufgeteilt werden, daß für jede Videokodierkraft die zu bearbeitenden Teilbereiche nach Prioritäten gewichtet werden, wobei für jede Videokodierkraft der Teilbereich, zu dem sie die größten Kenntnisse und Fertigkeiten besitzt, die höchste Priorität erhält, der Teilbereich mit den zweitgrößten Kenntnissen und Fertigkeiten die zweithöchste Priorität erhält, usw. und daß die jeweiligen Videokodieraufträge an die Videokodierplätze für die über die gemeldeten Kennungen identifizierten Videokodierkräfte so verteilt werden, daß die zu kodierenden Abbilder der Sendungen denjenigen freien Videokodierkräften zugeteilt werden, bei denen der regionale Teilbereich dieser zu kodierenden Sendung die höchste Priorität hat.

2. Verfahren zum Lesen der Adressen von Sendungen, bei dem die Abbilder der die Adressen aufweisenden Sendungsoberflächen aufgenommen, gespeichert und mindestens einer OCR-Einheit zum Erkennen der Adressen und Generieren entsprechender Adreßkodes zugeführt werden und bei dem im Falle nicht eindeutiger Leseergebnisse durch die OCR-Einheit/en die betreffenden Abbilder an mehreren Videokodierplätzen videokodiert werden, wobei die Verteilung der entsprechenden Videokodieraufträge an die Videokodierplätze in einer Auftragsverteileinrichtung erfolgt, dadurch gekennzeinet, daß jede Videokodierkraft an ihrem Videokcdierplatz eine persönliche Kennung eingibt, die an die Auftragsverteileinrichtung gemeldet wird, daß die zu kodierenden Abbilder der Sendungen in mehrere regionale Teilbereiche für die Empfängeradressen aufgeteilt werden, daß für die zu bearbeitenden Teilbereiche jede Videokodierkraft nach Prioritäten gewichtet wird, wobei die jeweilige Videokodierkraft für den Teilbereich, in dem sie die größten Kenntnisse und Fertigkeiten besitzt, die höchste Priorität erhält, für den Teilbereich, in dem sie die zweitgrößten Kenntnisse und Fertigkeiten besitzt,die zweithöchste Priorität erhält, usw. und daß die jeweiligen Videokodieraufträge an die Videokodierplätze für die über die gemeldeten Kennungen identifizierten Videokodierkräfte so verteilt werden, daß die zu kodierenden Abbilder der Sendungen denjenigen freien Videokodierkräften zugeteilt werden, die für den regionalen Teilbereich dieser zu kodierenden Sendung die höchste Priorität haben.

3. Verfahren nach Anspruch 1 oder 2, **dadurch gekennzeichnet, daß** der Umfang der Kenntnisse und Fertigkeiten der Videokodierkräfte in den regionalen Teilbereichen anhand ihrer statistisch aufbereiteten Kodierleistungen ermittelt wird.

4. Verfahren nach Anspruch 1 oder 2, **dadurch gekennzeichnet, daß** die an den Videokodierplätzen zu kodierenden Abbilder nach den regionalen Teilbereichen sortiert gespeichert werden, bevor sie an die Videokodierplätze verteilt werden.

5. Verfahren nach Anspruch 1 oder 2, **dadurch gekennzeichnet, daß** das Abbild jeder innerhalb einer bestimmten Zeit mittels Videokodierung nicht eindeutig erkannten vollständigen Adreßinformation mit den bei der Videokodierung erhaltenen Informationen über erkannte Adreßteile der OCR-Einheit zu einer weiteren automatischen Auswertung zugeführt wird.

6. Verfahren nach Anspruch 5, **dadurch gekennzeichnet, daß** das Abbild jeder bei der weiteren automatischen OCR-Auswertung nicht eindeutig erkannten vollständigen Adreßinformation mit den dabei erhaltenen Informationen dem gleichen Videokodierplatz wie bei der ersten Videokodierung zur weiteren Videokodierung zugeführt wird.

7. Verfahren nach Anspruch 5 oder 6, **dadurch gekennzeichnet, daß** bei der ersten Videokodierung eine Extraktionskodierung gemäß vorgegebener Extraktionsregeln erfolgt.

8. Verfahren nach Anspruch 6, **dadurch gekennzeichnet, daß** bei der weiteren Videokodierung eine Selektionskodierung derart erfolgt, daß aus einer Anzahl von alternativen Auswertungsergebnissen eine Selektion vorgenommen wird.

9. Vorrichtung zur Durchführung des Verfahrens nach Anspruch 1, mit einem automatischen Adreßlesesystem, das
- eine Vorrichtung zur Gewinnung von Abbildern von Sendungen (120) und deren Speicherung,
- einen OCR-Prozessor (130) zur automatischen Auswertung von Adreßinformationen aufweisenden Abbildern der Sendungsoberflächen,
- eine Vorrichtung zur Videokodierung der die Adreßinformationen enthaltenen Abbilder der Sendungsoberflächen mit mehreren Videokodierplätzen (200),
- eine Auftragsverteileinrichtung (179), die die Videokodieraufträge auf die einzelnen Videokodierplätze (200) verteilt,
aufweist, **dadurch gekennzeichnet, daß** die Auftragsverteileinrichtung (170) derart ausgebildet ist, daß jede Videokodierkraft an ihrem Videokodierplatz (200) eine persönliche Kennung eingibt, die an die Auftragsverteileinrichtung (170) gemeldet wird, daß die zu kodierenden Abbilder der Sendungen in mehrere regionale Teilbereiche für die Empfängeradressen aufgeteilt werden, daß für jede Videokodierkraft die zu bearbeitenden Teilbereiche nach Prioritäten gewichtet werden, wobei für jede Videokodierkraft der Teilbereich, zu dem sie die größten Kenntnisse und Fertigkeiten besitzt, die höchste Priorität erhält, der Teilbereich mit den zweitgrößten Kenntnissen und Fertigkeiten die zweithöchste Priorität erhält, usw. und daß die jeweiligen Videokodieraufträge an die Videokodierplätze (200) für die über die gemeldeten Kennungen identifizierten Videokodierkräfte so verteilt werden, daß die zu kodierenden Abbilder der Sendungen denjenigen freien Videokodierkräften zugeteilt werden, bei denen der regionale Teilbereich dieser zu kodierenden Sendung die höchste Priorität hat.

10. Vorrichtung zur Durchführung des Verfahrens nach Anspruch 2, mit einem automatischen Adreßlesesystem, das
- eine Vorrichtung zur Gewinnung von Abbildern von Sendungen (120) und deren Speicherung,
- einen OCR-Prozessor (130) zur automatischen Auswertung von Adreßinformationen aufweisenden Abbildern der Sendungsoberflächen,
- eine Vorrichtung zur Videokodierung der die Adreßinformationen enthaltenen Abbilder der Sendungsoberflächen mit mehreren Videokodierplätzen (200),
- eine Auftragsverteileinrichtung (179), die die Videokodieraufträge auf die einzelnen Videokodierplätze (200) verteilt,
**dadurch gekennzeichnet, daß** die Auftragsverteileinrichtung (170) derart ausgebildet ist, daß jede Videokodierkraft an ihrem Videokodierplatz (200) eine persönliche Kennung eingibt, die an die Auftragsverteileinrichtung gemeldet wird, daß die zu kodierenden Abbilder der Sendungen in mehrere regionale Teilbereiche für die Empfängeradressen aufgeteilt werden, daß für die zu bearbeitenden Teilbereiche jede Videokodierkraft nach Prioritäten gewichtet wird, wobei die jeweilige Videokodierkraft für den Teilbereich, in dem sie die gröOten Kenntnisse und Fertigkeiten besitzt, die höchste Priorität erhält, für den Teilbereich, in dem sie die zweitgrößten Kenntnisse und Fertigkeiten besitzt, die zweithöchste Priorität erhält, usw. und daß die jeweiligen Videokodieraufträge an die Videokodierplätze für die über die gemeldeten Kennungen identifizierten Videokodierkräfte so verteilt werden, daß die zu kodierenden Abbilder der Sendungen denjenigen freien Videokodierkräften zugeteilt werden, die für den regionalen Teilbereich dieser zu kodierenden Sendung die höchste Priorität haben.

## Claims

1. Method for reading addresses on items of mail, in which the images of the surfaces of the items of mail which have the addresses are recorded, stored and fed to at least one OCR unit for recognizing the addresses and generating corresponding address codes, and in which in the case of ambiguous reading results by the OCR unit or units the respective images are video coded at a plurality of video coding stations, the corresponding video coding orders being distributed to the video coding stations in an order-distributing device, **characterized in that** each member of the video coding personnel enters, at his video coding station, a personal identifier which is signalled to the order-distributing device, **in that** the images of the items of mail which are to be coded are divided into a plurality of regional subdivisions for the receiver addresses, **in that**, for each member of the video coding personnel, the subdivisions to be processed are weighted according to priorities, in which case, for each member of the video coding personnel, the subdivision with respect to which said member has the greatest knowledge and skills is given the highest priority, the subdivision with the second greatest knowledge and skills is given the second highest priority, etc., and **in that** the respective video coding orders are distributed to the video coding stations for the members of the video coding personnel who are identified by means of the signalled identifiers, in such a way that the images of the items of mail which are to be coded are allocated to those free members of the video coding personnel for which the regional subdivision of this item of mail which is to be coded has the highest priority.

2. Method for reading the addresses on items of mail, in which the images of the surfaces of the items of mail which have the addresses are recorded, stored are fed to at least one OCR unit for recognizing the addresses and generating corresponding address codes, and in which in the case of ambiguous reading results by the OCR unit or units the respective images are video coded at a plurality of video coding stations, the corresponding video coding orders being distributed to the video coding stations in an order-distributing device, **characterized in that** each member of the video coding personnel enters, at his video coding station, a personal identifier which is signalled to the order-distributing device, **in that** the images of the items of mail which are to be coded are divided into a plurality of regional subdivisions for the receiver addresses, **in that**, for the subdivisions to be processed, each member of the video coding personnel is weighted according to priorities, in which case the respective member of the video coding personnel is given the highest priority for the subdivision in which he has the greatest knowledge and skills, is given the second highest priority for the subdivision in which he has the second greatest knowledge and skills, etc., and **in that** the respective video coding orders are distributed to the video coding stations for the members of the video coding personnel who are identified by means of the signalled identifiers, in such a way that the images of the items of mail which are to be coded are allocated to those free members of the video coding personnel who have the highest priority for the regional subdivision of this item of mail which is to be coded.

3. Method according to Claim 1 or 2, **characterized in that** the scope of the knowledge and skills of the video coding personnel in the regional subdivisions is determined by reference to their statistically conditioned coding performances.

4. Method according to Claim 1 or 2, **characterized in that** the images which are to be coded at the video coding stations are stored sorted according to the regional subdivisions before they are distributed to the video coding stations.

5. Method according to Claim 1 or 2, **characterized in that** the image of each complete item of address information which is not unambiguously recognized within a specific time by means of video coding is fed, together with the information - obtained during the video coding - relating to recognized parts of the address, to the OCR unit for further automatic evaluation.

6. Method according to Claim 5, **characterized in that** the image of each complete item of address information which is not unambiguously recognized during the further automatic OCR evaluation is fed, with the information obtained in the process, to the same video coding station as during the first video coding, for further video coding.

7. Method according to Claim 5 or 6, **characterized in that**, during the first video coding, extraction coding according to predefined extraction rules is carried out.

8. Method according to Claim 6, **characterized in that**, during the further video coding, selection coding is carried out in such a way that a selection is made from a number of alternative evaluation results.

9. Device for carrying out the method according to Claim 1, having an automatic address-reading system which has
- a device for acquiring images of items of mail (120) and storing them,
- an OCR processor (130) for automatically evaluating images of the surfaces of the items of mail having address information,
- a device for video coding the images of the surfaces of the items of mail containing the address information, said device having a plurality of video coding stations (200),
- an order-distributing device (179) which distributes the video coding orders to the individual video coding stations (200),
**characterized in that** the order-distributing device (170) is embodied in such a way that each member of the video coding personnel enters, at his video coding station (200), a personal identifier which is signalled to the order-distributing device, **in that** the images of the items of mail which are to be coded are divided into a plurality of regional subdivisions for the receiver addresses, **in that**, for each member of the video coding personnel, the subdivisions to be processed are weighted according to priorities, in which case, for each member of the video coding personnel, the subdivision with respect to which said member has the greatest knowledge and skills is given the highest priority, the subdivision with the second greatest knowledge and skills is given the second highest priority, etc., and **in that** the respective video coding orders are distributed to the video coding stations (200) for the members of the video coding personnel who are identified by means of the signalled identifiers, in such a way that the images of the items of mail which are to be coded are allocated to those free members of the video coding personnel for which the regional subdivision of this item of mail which is to be coded has the highest priority.

10. Device for carrying out the method according to Claim 2, having an automatic address reading system which has
- a device for acquiring images of items of mail (120) and storing them,
- an OCR processor (130) for automatically evaluating images of the surfaces of the items of mail having address information,
- a device for video coding the images of the surfaces of the items of mail containing the address information, said device having a plurality of video coding stations (200),
- an order-distributing device (179) which distributes the video coding orders to the individual video coding stations (200),
**characterized in that** the order-distributing device (170) is embodied in such a way that each member of the video coding personnel enters, at his video coding station (200), a personal identifier which is signalled to the order-distributing device, **in that** the images of the items of mail which are to be coded are divided into a plurality of regional subdivisions for the receiver addresses, **in that**, for the subdivisions to be processed, each member of the video coding personnel is weighted according to priorities, in which case the respective member of the video coding personnel is given the highest priority for the subdivision in which he has the greatest knowledge and skills, is given the second highest priority for the subdivision in which he has the second greatest knowledge and skills, etc., and **in that** the respective video coding orders are distributed to the video coding stations for the members of the video coding personnel who are identified by means of the signalled identifiers; in such a way that the images of the items of mail which are to'be coded are allocated to those free members of the video coding personnel who have the highest priority for the regional subdivision'of this item of mail which is to be coded.

## Revendications

1. Procédé pour lire les adresses sur des envois, selon lequel on prend des clichés des surfaces d'envoi qui portent les adresses, on les mémorise et on les fait parvenir à au moins une unité ROC destinée à reconnaître les adresses et à générer un code d'adresse correspondant et selon lequel, au cas où les résultats de lecture par l'unité (les unités) ROC ne sont pas univoques, les clichés correspondants sont vidéocodés dans plusieurs postes de codage vidéo, la distribution des tâches de codage vidéo correspondantes aux postes de codage vidéo étant réalisée dans une installation de distribution des tâches, **caractérisé en ce que** chaque employé du codage vidéo dans son poste de codage vidéo donne un identificateur personnel qui est déclaré à l'installation de distribution des tâches, que les clichés - à coder - des envois sont répartis en plusieurs domaines partiels régionaux pour les adresses de destinataires, que les domaines partiels à traiter sont pondérés selon des priorités pour chaque employé du codage vidéo, pour chaque employé du codage vidéo le domaine partiel dans lequel il possède les meilleures connaissances et compétences obtient alors la priorité maximale, le domaine partiel lié aux connaissances et aux compétences de deuxième ordre obtient la priorité de deuxième ordre, etc., et que chacune des tâches de codage vidéo est répartie de telle manière entre les postes de codage vidéo pour les employés du codage vidéo identifiés par les identificateurs déclarés que les clichés - à coder
- des envois sont attribués aux employés du codage vidéo libres pour lesquels le domaine partiel régional de cet envoi à coder a la priorité maximale.

2. Procédé pour lire les adresses sur des envois, selon lequel on prend des clichés des surfaces d'envoi qui portent les adresses, on les mémorise et on les fait parvenir à au moins une unité ROC destinée à reconnaître les adresses et à générer un code d'adresse correspondant et selon lequel, au cas où les résultats de lecture par l'unité (les unités) ROC ne sont pas univoques, les clichés correspondants sont vidéocodés dans plusieurs postes de codage vidéo, la distribution des tâches de codage vidéo correspondantes aux postes de codage vidéo étant réalisée dans une installation de distribution des tâches, **caractérisé en ce que** chaque employé du codage vidéo dans son poste de codage vidéo donne un identificateur personnel qui est déclaré à l'installation de distribution des tâches, que les clichés - à coder - des envois sont répartis en plusieurs domaines partiels régionaux pour les adresses de régionaux pour les adresses de destinataires, que chaque employé du codage vidéo est pondéré selon des priorités pour les domaines partiels à traiter, chaque employé du codage vidéo obtient alors la priorité maximale pour le domaine partiel dans lequel il possède les connaissances et les compétences les meilleures, il obtient la priorité de deuxième ordre pour le domaine partiel dans lequel il possède les connaissances et les compétences de deuxième ordre, etc. et que chacune des tâches de codage vidéo est répartie de telle manière entre les postes de codage vidéo pour les employés du codage vidéo identifiés par les identificateurs déclarés que les clichés - à coder - des envois sont attribués aux employés du codage vidéo libres qui ont la priorité maximale pour le domaine partiel régional de cet envoi à coder.

3. Procédé selon la revendication 1 ou 2, **caractérisé en ce que** l'étendue des connaissances et des compétences des employés du codage vidéo dans les domaines partiels régionaux est déterminée à l'aide de leurs rendements de codage préparés statistiquement.

4. Procédé selon la revendication 1 ou 2, **caractérisé en ce que** les clichés à coder dans les postes de codage vidéo sont mémorisés de façon triée selon les domaines partiels régionaux avant d'être répartis entre les postes de codage vidéo.

5. Procédé selon la revendication 1 ou 2, **caractérisé en ce que** le cliché de chaque information d'adresse complète qui n'est pas reconnue de façon univoque dans un laps de temps déterminé à l'aide du codage vidéo est acheminé, ainsi que les informations concernant les parties d'adresse reconnues qui ont été obtenues lors du codage vidéo, à l'unité ROC pour une autre exploitation automatique.

6. Procédé selon la revendication 5, **caractérisé en ce que** le cliché de chaque information d'adresse complète qui n'est pas reconnue de façon univoque lors de la nouvelle exploitation ROC automatique est acheminé, ainsi que les informations qui y ont été obtenues, pour un nouveau codage vidéo au même poste de codage vidéo que lors du premier codage vidéo.

7. Procédé selon la revendication 5 ou 6, **caractérisé en ce que**, lors du premier codage vidéo, on exécute un codage d'extraction selon des règles d'extraction prédéterminées.

8. Procédé selon la revendication 6, **caractérisé en ce que**, lors de l'autre codage vidéo, on exécute un codage de sélection de telle manière qu'on réalise une sélection parmi un certain nombre de résultats d'exploitation proposés.

9. Dispositif pour réaliser le procédé selon la revendication 1, comportant un système automatique de lecture d'adresses qui présente
- un dispositif destiné à obtenir des clichés d'envois (120) et à les mémoriser,
- un processeur ROC (130) destiné à exploiter automatiquement des clichés
- qui portent des informations d'adresse - des surfaces d'envois,
- un dispositif destiné à vidéocoder les clichés - qui comportent les informations d'adresse - des surfaces d'envois et équipé de plusieurs postes de codage vidéo (200),
- une installation de distribution des tâches (179) qui distribue les tâches de codage vidéo entre les postes de codage vidéo (200) particuliers,
**caractérisé en ce que** l'installation de distribution des tâches (170) est conçue de telle sorte que chaque employé du codage vidéo dans son poste de codage vidéo (200) donne un identificateur personnel qui est déclaré à l'installation de distribution des tâches (170), que les clichés - à coder - des envois sont répartis en plusieurs domaines partiels régionaux pour les adresses de destinataires, que les domaines partiels à traiter sont pondérés selon des priorités pour chaque employé du codage vidéo, pour chaque employé du codage vidéo le domaine partiel dans lequel il possède les meilleures connaissances et compétences obtient alors la priorité maximale, le domaine partiel lié aux connaissances et aux compétences de deuxième ordre obtient la priorité de deuxième ordre, etc., et que chacune des tâches de codage vidéo est répartie de telle manière entre les postes de codage vidéo (200) pour les employés du codage vidéo identifiés par les identificateurs déclarés que les clichés - à coder - des envois sont attribués aux employés du codage vidéo libres pour lesquels le domaine partiel régional de cet envoi à coder a la priorité maximale.

10. Dispositif pour réaliser le procédé selon la revendication 2, comportant un système automatique de lecture d'adresses qui présente
- un dispositif destiné à obtenir des clichés d'envois (120) et à les mémoriser,
- un processeur ROC (130) destiné à exploiter automatiquement des clichés - qui portent des informations d'adresse - des surfaces d'envois,
- un dispositif destiné à vidéocoder les clichés - qui comportent les informations d'adresse - des surfaces d'envois et équipé de plusieurs postes de codage vidéo (200),
- une installation de distribution des tâches (179) qui distribue les tâches de codage vidéo entre les postes de codage vidéo (200) particuliers,
**caractérisé en ce que** l'installation de distribution des tâches (170) est conçue de telle sorte que chaque employé du codage vidéo dans son poste de codage vidéo (200) donne un identificateur personnel qui est déclaré à l'installation de distribution des tâches, que les clichés - à coder - des envois sont répartis en plusieurs domaines partiels régionaux pour les adresses de destinataires, que chaque employé du codage vidéo est pondéré selon des priorités pour les domaines partiels à traiter, chaque employé du codage vidéo obtient alors la priorité maximale pour le domaine partiel dans lequel il possède les connaissances et les compétences les meilleures, il obtient la priorité de deuxième ordre, etc. pour le domaine partiel dans lequel il possède les connaissances et les compétences de deuxième ordre, et que chacune des tâches de codage vidéo est répartie de telle manière entre les postes de codage vidéo pour les employés du codage vidéo identifiés par les identificateurs déclarés que les clichés - à coder - des envois sont attribués aux employés du codage vidéo libres qui ont la priorité maximale pour le domaine partiel régional de cet envoi à coder.
